# EUROPÄISCHE PATENTSCHRIFT

(11) **EP 1 761 357 B1**
(45) Veröffentlichungstag und Bekanntmachung des Hinweises auf die Patenterteilung: **09.07.2008**
(21) Anmeldenummer: 05771524.5
(22) Anmeldetag: 23.06.2005
(51) Int. Cl.: B23K 20/12

(54) **PRESSSCHWEISSMASCHINE UND PRESSSCHWEISSVERFAHREN**
PRESSURE WELDING MACHINE AND PRESSURE WELDING METHOD
MACHINE ET PROCEDE DE SOUDAGE PAR PRESSION

(30) Priorität: 01.07.2004 DE 202004010386 U
(43) Veröffentlichungstag der Anmeldung: 14.03.2007
(73) Patentinhaber: KUKA Systems GmbH, 86165 Augsburg (DE)
(72) Erfinder: RUDOLPH, Frank, 86438 Kissing (DE); HAUCK, Thomas, 86438 Kissing (DE); MEYER, Harald, 86199 Augsburg (DE); SCHNEIDER, Klaus, 86316 Friedberg (DE); MENZINGER, Manfred, 86438 Kissing (DE); FISCHER, Otmar, 86150 Augsburg (DE)
(74) Vertreter: Ernicke, Klaus Stefan
(86) Internationale Anmeldenummer: PCT/EP2005/006766
(87) Internationale Veröffentlichungsnummer: WO 2006/002820

(56) Entgegenhaltungen:
- EP-A- 0 059 544
- DE-A1- 10 126 848
- GB-A- 1 097 233
- GB-A- 1 224 360
- JP-A- 2000 176 656
- PATENT ABSTRACTS OF JAPAN Bd. 002, Nr. 068 (E-035), 24. Mai 1978 (1978-05-24) & JP 53 033193 A (MITSUBISHI HEAVY IND LTD), 28. März 1978 (1978-03-28)
- PATENT ABSTRACTS OF JAPAN Bd. 010, Nr. 261 (M-514), 5. September 1986 (1986-09-05) & JP 61 086086 A (SANMEI DENKI KK), 1. Mai 1986 (1986-05-01)
- DATABASE WPI Section Ch, Week 198345 Derwent Publications Ltd., London, GB; Class M23, AN 1983-812975 XP002348687 & SU 986 681 A (CAR PROD AUTOM MECH) 7. Januar 1983 (1983-01-07)

## Beschreibung

Die Erfindung betrifft eine Pressschweißmaschine und ein Pressschweißverfahren mit den Merkmalen im Oberbegriff des Verfahrens- und Vorrichtungshauptanspruchs.

Eine solche Pressschweißmaschine ist in Form einer Doppelkopf-Reibschweißmaschine aus der EP 0 246 239 B1 bekannt. Sie besteht aus einem Gestell mit einem Maschinenbett, an dem zwei Reibschweißköpfe längs einer gemeinsamen Vorschubachse gegenläufig beweglich gelagert sind. Sie werden von zwei Stelleinheiten mit Vorschubantrieben längs der Vorschubachse bewegt. Die Stelleinheiten sind verstellbar am Maschinengestell gelagert und werden in der gewünschten Position am Maschinenbett durch hydraulisch betätigte Reibbremsen einzeln fixiert. Mit der Doppelkopf-Reibschweißmaschine wird ein zentrales Werkstück beidseitig mit weiteren Werkstücken durch Reibschweißen verbunden. Die Spindeldrehungen der beiden Reibschweißköpfe werden durch eine gemeinsame mit Motor und Bremse versehene Vorgelegewelle synchronisiert. Aus unterschiedlichen Werkstücklängen ergeben sich unterschiedliche Weglängen für Reibvorschub und Stauchhub, die durch unterschiedliche Ausfahrlängen der Vorschubantriebe erzeugt werden. Um die mehrere Tonnen großen Stauchkräfte beim Reibschweißen aufnehmen zu können, hat die Pressschweißmaschine ein massives Gestell und Maschinenbett. Dies bedeutet einen hohen Bauaufwand, wobei unerwünschte Verformungen trotzdem nicht vollständig aufgenommen werden können. Andererseits wird durch die große Gestellkonstruktion die Zugänglichkeit der Arbeitsstelle eingeschränkt.

In der JP 2000-176 656 A ist eine andere Doppelkopf-Reibschweißmaschine angesprochen. Sie besteht aus einem Maschinengestell mit einem Maschinenbett, an dem zwei Stelleinheiten mit Reibschweißköpfen längs einer gemeinsamen Vorschubachse gegenläufig beweglich gelagert sind. Die Reibschweißköpfe sind an ihrer Stelleinheit jeweils drehbar sowie in Axialrichtung starr gelagert und werden von einem eigenen Motor drehend angetrieben. Der Vorschub der Reibschweißköpfe erfolgt durch die Fahrbewegung der Stelleinheiten, die hierfür mit Schlitten eigenständig verstellbar am Maschinengestell gelagert sind und jeweils einen eigenen gestellfesten Stellantrieb haben. Die über die Stellantriebe eingeleiteten Pressschweißkräfte werden an dem entsprechend massiv ausgebildeten Maschinengestell abgestützt, das mit mehreren zusätzlichen Querwänden ausgesteift ist.

Die EP 0 059 544 A1 zeigt eine andere Reibschweißmaschine mit ebenfalls über eine Vorgelegewelle synchronisierten Spindeln. Die Stelleinheiten sind hierbei starr und unbeweglich am Maschinenbett fixiert.

Die GB 1 097 233 A befasst sich mit einer Reibschweißmaschine, die mit insgesamt vier Spannfuttern an einem gemeinsamen Führungsgestänge ausgerüstet ist und die es ermöglicht, zwei getrennte Werkstücke gleichzeitig oder zeitversetzt reibzuschweißen. Hierbei werden zwei Schweißköpfe mit drehbaren und motorisch angetriebenen Spannfuttern relativ gegenüber einem stationären Werkstückhalter bewegt. Für den axialen Vorschub sind maximal zwei Antriebe vorhanden.

Die GB 1 224 360 A offenbart eine konventionelle Doppelkopfreibschweißmaschine mit zwei axial beweglichen Schweißköpfen, die mit Vorschubantrieben bewegt werden, die starr mit dem Maschinengestell verbunden sind. Die Vorschubantriebe haben ein gemeinsames Hydrauliksystem, welches für eine gleichzeitige Bewegung der Schweißköpfe sorgen soll.

Die SU 986 681 A lehrt eine Doppelkopfreibschweißrnaschine, bei der ein Schweißkopf in axialer Richtung festgelegt ist, wobei sich nur der zentrale Ständer und der zweite gegenüberliegende Schweißkopf bewegen.

Die JP 53-33193 A zeigt eine Messeinrichtung für geschweißte Werkstücke und für die umgewandelte Menge des Schweißmaterials. Die Messeinrichtung besitzt ein Erfassungselement, das aus einem Material mit einem kleinen linearen Ausdehnungskoeffizienten besteht.

In der JP 61-86086 A ist ein Reibschweißverfahren angesprochen, bei dem die Temperatur des verdrängten Wulstmaterials gemessen wird. Wenn die Temperatur in einem vorbestimmten Bereich liegt, wird der Stauchhub ausgeführt.

Es ist Aufgabe der vorliegenden Erfindung, eine bessere Pressschweißmaschine nebst Pressschweißverfahren aufzuzeigen.

Die Erfindung löst diese Aufgabe mit den Merkmalen im Verfahrens- und Vorrichtungshauptanspruch.

Die beanspruchte Pressschweißmaschine hat den Vorteil eines wesentlich verringerten Bauaufwands, wobei zugleich ein größerer Arbeitsbereich und eine bessere Zugänglichkeit der Arbeitsstelle erreicht werden. Die beim Stauchen auftretenden Kräfte werden in einem geschlossenen Kräftesystem über das Stellelement aufgenommen, was die Gestellkonstruktion entlastet. Zugleich kann über das Stellelement eine beidseitige Verstellung der Stelleinheiten mit den Vorschubantrieben entlang einer vorzugsweise gemeinsamen und durchgehenden Führungsebene erreicht werden. Diese Verstellung kann zudem symmetrisch sein. Besondere Vorteile bietet hierbei die Ausgestaltung des Stellelements als durchgehende Spindel mit zwei gegenläufigen Gewinden, die über entsprechende Mutteraufnahmen mit den Stelleinheiten verbunden ist. Günstig ist hierbei ein selbsthemmendes Bewegungsgewinde, welches die hohen Stauchkräfte aufnehmen und abstützen kann.

Für das zentrale Werkstück ist eine vorzugsweise ebenfalls verfahrbare zentrale Spannvorrichtung vorhanden, die mit zwei Werkstückhaltern ausgerüstet ist, welche über Schlittensteller oder Verbindungsstangen mit den jeweils zugeordneten Stelleinheiten verbunden sind. Hierdurch lassen sich die zentrale Spannvorrichtung und die Stelleinheiten gleichzeitig und synchron positionieren. Eine federnde Verbindung zwischen Schlittenstellern und Werkstückhaltern ermöglicht beim Stauchhub eine Ausweichbewegung der Werkstückhalter zur Aufnahme der Stauchverformung des zentralen Werkstücks.

Die beanspruchte Pressschweißmaschine verfügt außerdem über eine Messeinrichtung, die es ermöglicht, beim Pressschweißen die echten Vorschübe und die reinen Werkstückverkürzungen ohne die beim Stauchen auftretenden elastischen Verformungen des zentralen Werkstücks zu messen. Hierdurch ist es möglich, die beim einen Pressschweißprozess für bestimmte Werkstücke und Werkstücklängen ermittelten Prozessparameter auch auf andere gleichartige Werkstücke mit anderen Längen zu übertragen. Dies war bisher nicht möglich, weil in den Weg-Messwerten stets die elastische Verformung des zentralen Werkstücks enthalten war, die sich bei einer Veränderung der Werkstücklängen ebenfalls änderte und somit in die Prozessparameter einfloss. Für die beanspruchte Messeinrichtung ist es günstig, einen Maßstab und einen zugehörigen Messkopf relativ beweglich zueinander am Werkstückhalter und am zugeordneten Schweißkopf anzuordnen, so dass genau deren Bewegung gemessen wird. Die elastische Verformung des zentralen Werkstücks wird über die federnd nachgiebige Beweglichkeit der Werkstückspanner eliminiert.

Die beanspruchte Pressschweißmaschine kann mit beliebigen Pressschweißverfahren arbeiten. Dies kann z.B. das Reibschweißen oder das Schweißen mit einem magnetisch oder anderweitig bewegten Lichtbogen sein. Die miteinander verschweißten Werkstücke können rotationssymmetrisch sein, was allerdings keine zwingende Voraussetzung ist.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Pressschweißmaschine in geöffneter Ruhestellung in Seitenansicht,
- Figur 2:: die Pressschweißmaschine von Fig. 1 in Arbeitsposition und
- Figur 3:: eine vergrößerte Darstellung des Mittelbereichs der Pressschweißmaschine von Fig. 1.

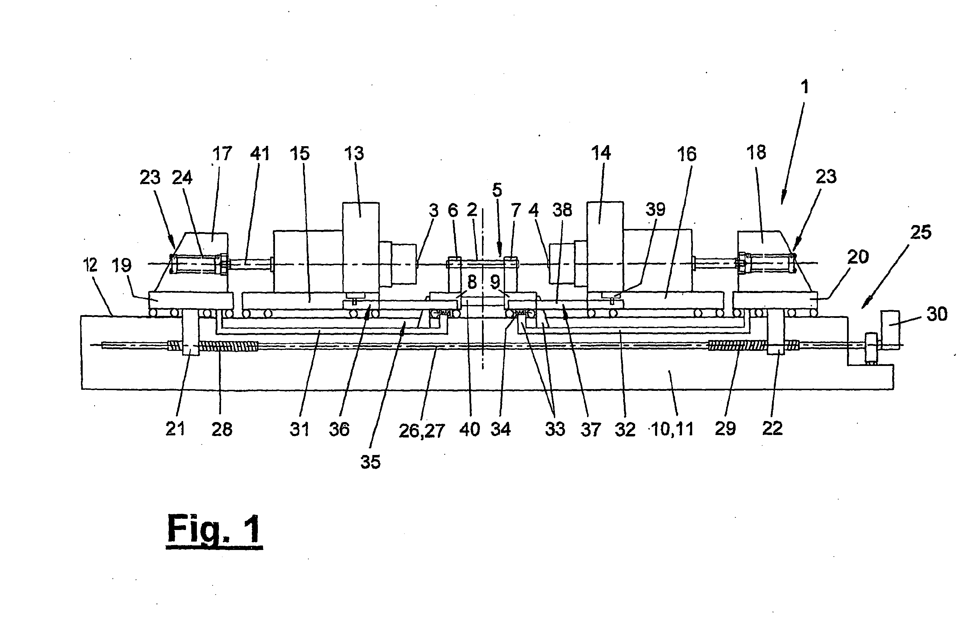

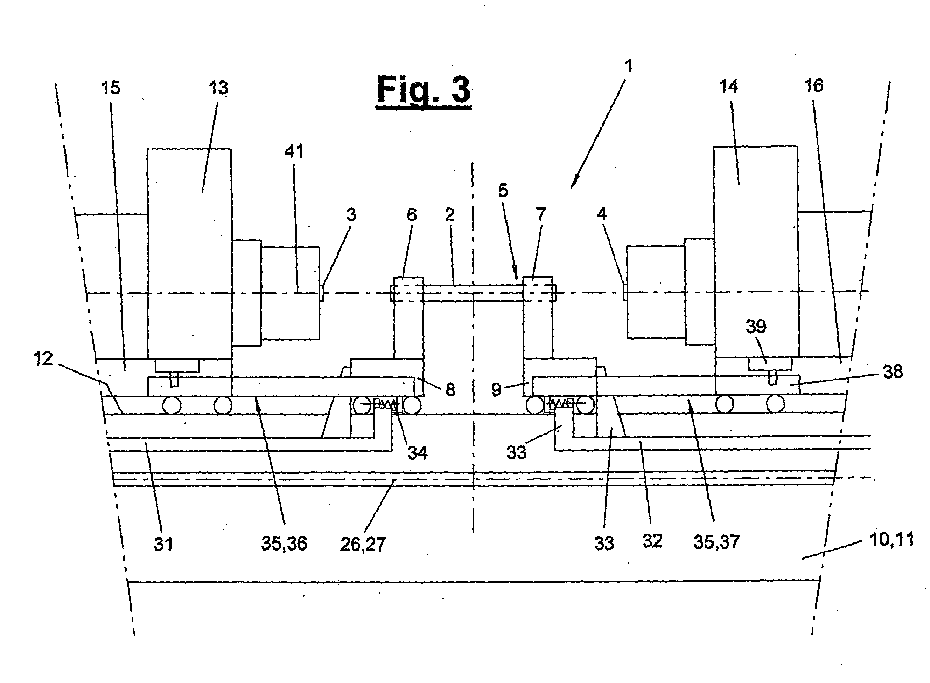

Figur 1 bis 3 zeigen eine Pressschweißmaschine (1) in schematischen Seitenansichten und in verschiedenen Betriebsstellungen. Die Pressschweißmaschine (1) dient zum Schweißen von zwei, drei oder mehr Werkstücken (2,3,4), wobei z.B. an einem zentralen Werkstück (2) an beiden Enden ein oder mehrere äußere Werkstücke (3,4) angeschweißt werden. Die Pressschweißtechnik kann von beliebiger Art sein. Z.B. kann es sich um das Reibschweißen mit motorischem Direktantrieb oder Schwungmassenantrieb oder das Schweißen mit einem magnetisch oder anderweitig bewegten Lichtbogen oder dgl. handeln. Die Werkstücke (2,3,4) sind entlang einer vorzugsweise gemeinsamen Vorschubachse oder Stauchachse (41) angeordnet und werden am Ende des Pressschweißvorganges durch einen Stauchhub aufeinander zubewegt und miteinander verbunden.

Die Pressschweißmaschine (1) ist als sog. Doppelkopfmaschine ausgebildet. Sie besteht aus einem Gestell (10) mit einem zentralen Spanner (5) für das zentrale Werkstück (2), zwei beidseitig anschließenden beweglichen Schweißköpfen (13,14) und zwei hier wiederum beidseitig anschließenden Stelleinheiten (17,18) mit Vorschubantrieben (23) für die Schweißköpfe (13,14). Die Pressschweißmaschine (1) weist ferner eine rechnergestützte, programmierbare Maschinen- und Prozesssteuerung auf (nicht dargestellt). Der zentrale Spanner (5), die Schweißköpfe (13,14) und die Stelleinheiten (17,18) sind allesamt über Fahrschlitten (8,9,15,16, 19,20) entlang der vorzugsweise gemeinsamen Vorschubachse oder Stauchachse (41) beweglich am Gestell (10) gelagert und dabei an einer vorzugsweise ebenfalls gemeinsamen Schlittenführung (12) axial beweglich gelagert und geführt. Die Lagerung und Führung kann z.B. über kippfeste Rollenlager oder dgl. geschehen. Die beiden außenliegenden Stelleinheiten (17,18) sind untereinander mittels eines gemeinsamen Stellelements (26) mit einem Stellantrieb (25) verbunden und abgestützt.

Das Stellelement (26) ist vorzugsweise als durchgehende Spindel (27) mit zwei zumindest endseitig angeordneten und gegenläufigen Gewinden (28,29) ausgebildet. Diese Gewinde (28,29) sind jeweils als Bewegungsgewinde, insbesondere als links- und rechtsgängige Schraubengewinde, ausgebildet. Hierbei kann es sich z.B. um Trapezgewinde handeln. Die Gewinde (28,29) stehen mit Muttern (21,22) im Eingriff, die über Ausleger mit den Stelleinheiten (17,18) verbunden sind. Die Spindel (27) ist unterhalb der Schweißköpfe (13,14) und der Stelleinheiten (17,18) angeordnet und ist in einem Maschinenbett (11) drehbar gelagert. Sie befindet sich zwischen den seitlich distanzierten Schienen der Schlittenführung (12) und kann mit diesen auf gleicher Höhe oder knapp unter diesen angeordnet sein. Die Gewinde (28,29) und/oder die Spindel (27) können in beliebig geeigneter Weise bei Bedarf in Ruhestellung fixiert werden, z.B. durch Bremsen, eine Gewinde-Selbsthemmung oder dgl.

Die beim Pressschweißen auftretenden und von den Vorschubantrieben (23) ausgeübten Stauchkräfte werden über die Muttern (21,22) auf das Stellelement (26) bzw. die Spindel (27) übertragen und abgestützt. Hierdurch ergibt sich ein geschlossener Kraftschluss, der das Gestell (10) entlastet. Über die Schlittenführung (12) müssen lediglich etwaig auftretende Kippmomente aufgenommen werden. Die Fahrschlitten (19,20) der Stelleinheiten (17,18) können außerdem in den Betriebsstellungen durch Klemmeinrichtungen oder dgl. zusätzlich an der Schlittenführung (12) bzw. an dem Gestell (10) fixiert werden.

Das Stellelement (26) kann alternativ in andere geeignete Weise ausgebildet sein. Gleiches gilt für dessen Stellantrieb (25). Im gezeigten Ausführungsbeispiel ist er als Spindelantrieb ausgebildet und besteht aus einem zur exakten Positionierung genau steuerbaren Motor (30), vorzugsweise einem Elektromotor. Zwischen dem Motor (30) und der Spindel (27) kann ein Untersetzungsgetriebe geschaltet sein.

Der zentrale Spanner (5) besteht aus zwei mit axialer Distanz angeordneten Werkstückhaltern (6,7), die das zentrale Werkstück (2) in der Nähe der Stirnenden mit geeigneten Spanneinrichtungen.halten und spannen. Die Werkstückhalter (6,7) sind jeweils mit einem Fahrschlitten oder Halterschlitten (8,9) ausgerüstet und können sich unabhängig von einander längs der Schlittenführung (12) und der Stauchachse (41) bewegen. Die Werkstückhalter (6,7) oder ihre Halterschlitten (8,9) sind mit der jeweils zugeordneten Stelleinheit (17,18) über einen stangenförmigen Schlittensteller (31,32) formschlüssig verbunden. Der Schlittensteller (31,32) ist z.B. am Fahrschlitten (19,20) der Stelleinheit (17,18) starr befestigt und wird bei den Fahrbewegungen der Stelleinheit (17,18) mit bewegt. Am anderen Ende greifen die Schlittensteller (31,32) über ein oder mehrere Mitnehmer (33) formschlüssig am zugehörigen Werkstückhalter (6,7) oder Halterschlitten (8,9) an. Hierbei erfolgt eine Mitnahme bei der Vorwärts- und Rückwärtsfahrt.

In Richtung zum Maschinenzentrum hin ist eine Feder (34) zwischen Mitnehmer (33) und Werkstückhalter (6,7) und Halterschlitten (8,9) geschaltet. Sie bewirkt eine Aufnahme der Ausweichbewegungen der Werkstückhalter (6,7) beim Stauchen. Bei den sehr hohen auftretenden Stauchkräften, die 20 Tonnen oder mehr betragen können, verformt sich das zentrale Werkstück (2) unter Druck, wobei die Werkstückhalter (6,7) sich gegen die rückstellende Kraft der Feder (34) bewegen und zum axialen Maschinenzentrum wandern. Nach Entlastung vom Stauchdruck oder der Stauchkraft erfolgt eine Rückwärtsbewegung in die Ausgangsstellung unter Entlastung der Feder (34).

Die Schweißköpfe (13,14) sind entsprechend der gewählten Schweißtechnik ausgebildet und mit Fahrschlitten (15,16) ausgerüstet. Sie besitzen Spannfutter zur Aufnahme und Einspannung des linken und rechten Werkstücks (3,4). Für das Reibschweißen können die Schweißköpfe (13,14) einen Drehantrieb für das Spannfutter aufweisen, wodurch das zugehörige Werkstück (3,4) gegenüber dem vorzugsweise still stehenden zentralen Werkstück (2) zum Anreiben gedreht wird. Zum Schweißen mit einem magnetisch bewegten Lichtbogen ist an den Schweißköpfen (13,14) und/oder an der zentralen Spannvorrichtung (5) die hierfür benötigte Lichtbogeneinheit mit einer Spule zur Lichtbogenablenkung etc. angeordnet. Bei Einsatz anderer Pressschweißtechniken, die eine Erwärmung der Grenzflächen der zu verschweißenden Werkstücke (2,3,4)' auf andere Weise bewirken, sind die Schweißköpfe (13,14) entsprechend anders ausgebildet.

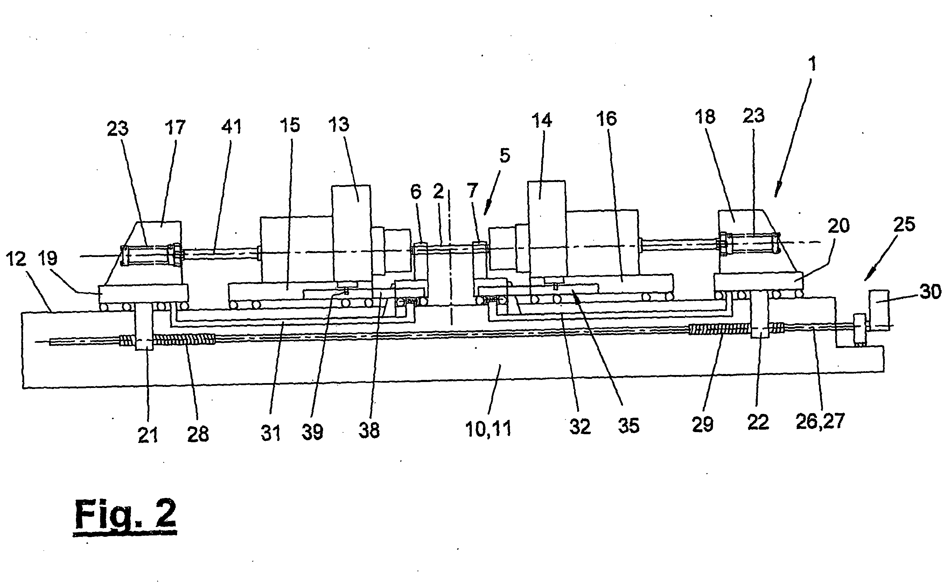

Rückseitig werden die Schweißköpfe (13,14) vom Vorschubantrieb (23) der zugehörigen Stelleinheit (17,18) beaufschlagt. Der Vorschubantrieb (23) befindet sich vorzugsweise fluchtend mit den Werkstücken (2,3,4) in der gemeinsamen Vorschubachse (41) oder ist ggf. parallel dazu mit geringem Abstand angeordnet. Der Vorschubantrieb (23) bewirkt die Zustellung des zugehörigen Schweißkopfs (13,14) aus der in Figur 1 gezeigten zurückgezogenen Ruhestellung in die in Figur 2 dargestellte Arbeitsstellung. In der Arbeitsstellung kommen die Grenzflächen der benachbarten Werkstücke (2,3,4) je nach Schweißprozess in Berührungskontakt oder werden in einem bestimmten Abstand zueinander positioniert. Je nach Schweißprozess werden sie in dieser Position eine Zeitlang gehalten oder weiterbewegt.

Beim Reibschweißen erfolgt ein zum Maschinenzentrum gerichteter Reibvorschub. Beim Schweißen mit magnetisch oder anderweitig bewegtem Lichtbogen bleiben die Schweißköpfe (13,14) in der Zustellposition zunächst stehen. Mittels der vorzugsweise axial fluchtenden Vorschubantriebe (23) wird zum Ende des Pressschweißprozesses außerdem der erforderliche gegeneinander gerichtete Stauchhub mit den benötigten Stauchkräften oder Stauchdrücken aufgebracht. Nach Beendigung des Pressschweißprozesses fahren die Vorschubantriebe (23) die Schweißköpfe (13,14) wieder in die Ausgangsstellung gemäß Figur 1 zurück. In dieser Ausgangsstellung ist ein Entladen und Beladen der Pressschweißmaschine 1 mit den Werkstücken (2,3,4) möglich.

Die Vorschubantriebe (23) sind vorzugsweise gleichartig ausgebildet. Sie können eine beliebige konstruktive Gestaltung haben. Im gezeigten Ausführungsbeispiel handelt es sich um hydraulische Zylinder (24) die in den Aufbauten der Stelleinheiten (17,18) angeordnet und abgestützt sind.

Deren Kolbenstangen sind mit dem zugehörigen Schweißkopf (13,14) verbunden. Alternativ kann es sich um elektromotorische Antriebe mit ausfahrbaren Spindeln oder dgl. handeln. Daneben sind weitere beliebige Arten von Antriebstechniken möglich.

Die Pressschweißmaschine (1) besitzt eine Messeinrichtung (35) zum Messen der echten Vorschübe im Schweißprozess und der dabei auftretenden reinen Werkstückverkürzungen ohne Beeinflussung durch die vorerwähnte elastische Stauchverformung des zentralen Werkstücks (2). Die Messeinrichtung (35) hat eigenständige Bedeutung-und kann auch bei anderen Arten von Pressschweißmaschinen, insbesondere solchen nach dem Stand der Technik, mit Erfolg eingesetzt werden. Dies gilt z.B. für Pressschweißmaschinen (1) mit stationären Stelleinheiten (17,18) oder stationär angeordneten Vorschubantrieben (23) .

Die Messeinrichtung (35) besitzt mindestens eine zwischen einem Werkstückhalter (6,7) und dem zugeordneten Schweißkopf (13,14) angeordnete Messeinheit (36,37). Im gezeigten Ausführungsbeispiel mit zwei verfahrbaren Schweißköpfen (13,14) sind zwei solche Messeinheiten (36,37) vorhanden. Die Messeinheiten (36,37) bestehen jeweils aus einem stab- oder stangenförmigen Maßstab (38) und einem Messkopf (39), die relativ zueinander beweglich am Werkstückhalter (6,7) und am jeweils zugeordneten Schweißkopf (13,14) angeordnet sind. Im gezeigten Ausführungsbeispiel ist der Maßstab (38) jeweils am Werkstückhalter (6,7) angeordnet und ist entlang der Vorschubachse (41) ausgerichtet. Er erstreckt sich vom Werkstückhalter (6,7) jeweils nach hinten zum zugeordneten Schweißkopf (13,14). Der Maßstab (38) ist z.B. als Glasstab ausgebildet und trägt eine Skala von Wegmarkierungen. Der Lesekopf (39) ist bei dieser Ausbildung jeweils am Schweißkopf (13,14) angeordnet und auf den zugehörigen Maßstab (38) gerichtet. Der Messkopf (39) kann z.B. ein optischer Wegmesser sein, der die Markierungen am Maßstab (38) abliest. Alternativ kann jede andere geeignete Wegmesstechnik zum Einsatz kommen, wobei der Maßstab (38) und der Messkopf (39) entsprechend ausgebildet sind. Die in den Zeichnungen gezeigte kinematische Zuordnung kann auch umgekehrt sein, wobei sich der Messkopf (39) am Werkstückhalter (6,7) und der Maßstab (38) am Schweißkopf (13,14) befindet.

Über die Messeinheiten (36,37) lässt sich die axiale Relativbewegung zwischen dem Werkstückhalter (6,7) und dem Schweißkopf (13,14) sehr genau messen. Diese Relativbewegung gibt beim Reibschweißen den exakten Reib- und Stauchweg an. Aus der.Summe der linken und rechten Wege ergibt sich hierdurch die durch das Reibschweißen erfolgte Bauteilverkürzung des gesamten Schweißteils. Beim Schweißen mit magnetisch bewegtem Lichtbogen werden nach einem anfänglichem Kontakt anschließend die Werkstücke zur Lichtbogenzündung distanziert, wobei über die Messeinheiten (36,37) die für den Prozess erforderliche Positionierung und Distanz der zu verschweißenden Werkstücke (2,3,4) eingestellt und angefahren wird. Nach dem anschließenden Stauchhub kann die sich ergebende Werkstückverkürzung ermittelt werden.

Die Messeinrichtung (35) kann ferner eine zentrale Messeinheit (40) aufweisen, die z.B. zwischen den Werkstückhaltern und/oder ggf. auch zwischen den Schweißköpfen (13,14) angeordnet ist. Hierüber lässt sich die Gesamtlänge der Werkstücke (2,3,4) vor dem Schweißen und auch nach dem Schweißen ermitteln. Die zentrale Messeinheit (40) ist in Figur 1 schematisch angedeutet. Sie kann in beliebig geeigneter Weise konstruktiv ausgebildet sein und ebenfalls ein oder mehrere stangenförmige Maßstäbe (38) und Messköpfe (39) aufweisen.

Die Schweißköpfe (13,14), der Stellantrieb (25), die Stelleinheiten (17,18) nebst Vorschubantrieben (23) und die Messeinrichtung (35) sind mit der Maschinen- und Prozesssteuerung verbunden und werden von dieser mit geeigneten Programmen gesteuert und geregelt.

Abwandlungen der gezeigten Ausführungsform sind in verschiedener Weise möglich. Dies betrifft die konstruktive Gestaltung der zentralen Spannvorrichtung (5), der Schweißköpfe (13,14), der Stelleinheiten (17,18) und des Stellelements (26) nebst Stellantrieb (25). Auch das Gestell (11) kann anders ausgebildet sein. Die Art und Anordnung der Fahrschlitten (8,9,15,16,19,20) ist beliebig wählbar. Gleiches gilt für die Art und Anordnung der Schlittenführung (12).

### BEZUGSZEICHENLISTE

- 1: Pressschweißmaschine, Doppelkopfmaschine
- 2: Werkstück, zentral
- 3: Werkstück, außen links
- 4: Werkstück, außen, rechts
- 5: zentrale Spannvorrichtung
- 6: Werkstückhalter
- 7: Werkstückhalter
- 8: Fahrschlitten, Halterschlitten, links
- 9: Fahrschlitten, Halterschlitten, rechts
- 10: Gestell
- 11: Maschinenbett
- 12: Schlittenführung
- 13: Schweißkopf, links
- 14: Schweißkopf, rechts
- 15: Fahrschlitten, Stauchschlitten, links
- 16: Fahrschlitten, Stauchschlitten, rechts
- 17: Stelleinheit, links
- 18: Stelleinheit, rechts
- 19: Fahrschlitten, Stellschlitten
- 20: Fahrschlitten, Stellschlitten
- 21: Mutter, links
- 22: Mutter, rechts
- 23: Vorschubantrieb, Stauchantrieb
- 24: Zylinder, Hydraulikzylinder
- 25: Stellantrieb
- 26: Stellelement
- 27: Spindel
- 28: Gewinde, links
- 29: Gewinde, rechts
- 30: Motor, Spindelmotor
- 31: Schlittensteller, links
- 32: Schlittensteller, rechts
- 33: Mitnehmer
- 34: Feder
- 35: Messeinrichtung
- 36: Messeinheit, links
- 37: Messeinheit, rechts
- 38: Massstab
- 39: Lesekopf
- 40: Messeinheit, zentral
- 41: Vorschubachse, Stauchachse

## Patentansprüche

1. Pressschweißmaschine mit einem Gestell (10), zwei längs einer Vorschubachse (41) beweglichen Schweißköpfen (13,14) und zwei Stelleinheiten (17,18) mit Vorschubantrieben (23) für die Schweißköpfe (13,14), **dadurch gekennzeichnet, dass** die beiden Stelleinheiten (17,18) axial (41) beweglich am Gestell (10) gelagert und untereinander mittels eines gemeinsamen Stellelements (26) mit einem Stellantrieb (25) verbunden und abgestützt sind.

2. Pressschweißmaschine nach Anspruch 1, **dadurch gekennzeichnet, dass** das Stellelement (26) als durchgehende Spindel (27) mit zwei gegenläufigen Gewinden (28,29) ausgebildet ist, welche mit Muttern (21,22) an den Stelleinheiten (17,18) verbunden sind.

3. Pressschweißmaschine.nach Anspruch 1 oder 2, **dadurch gekennzeichnet, dass** die Gewinde (28,29) als Bewegungsgewinde, insbesondere als Kugel- oder Trapezgewinde, ausgebildet sind.

4. Pressschweißmaschine nach Anspruch 1, 2 oder 3, **dadurch gekennzeichnet, dass** die Spindel (27) unterhalb der Schweißköpfe (13,14) und Stelleinheiten (17,18) im Maschinenbett (11) angeordnet ist.

5. Pressschweißmaschine nach einem der vorhergehenden Ansprüche, **dadurch gekennzeichnet, dass** der Stellantrieb (25) einen steuerbaren Motor (30), insbesondere einen Elektromotor, zum Antrieb der Spindel (27) aufweist.

6. Pressschweißmaschine nach einem der vorhergehenden Ansprüche, **dadurch gekennzeichnet, dass** das Gestell (10) eine Schlittenführung (12) für die formschlüssige Lagerung und Führung von Fahrschlitten (14,16,19,20) der Schweißköpfe (13,14) und Stelleinheiten (17,18) aufweist.

7. Pressschweißmaschine nach einem der vorhergehenden Ansprüche, **dadurch gekennzeichnet, dass** die Pressschweißmaschine (1) eine bewegliche zentrale Spannvorrichtung (5) für ein zentrales Werkstück (2) aufweist, die zwischen den Schweißköpfen (13,14) beweglich an der Schlittenführung (12) gelagert und geführt ist.

8. Pressschweißmaschine nach einem der vorhergehenden Ansprüche, **dadurch gekennzeichnet, dass** die zentrale Spannvorrichtung (5) zwei distanzierte Werkstückhalter (6,7) aufweist, die an der Schlittenführung (12) beweglich gelagerte Halterschlitten (8,9) aufweisen.

9. Pressschweißmaschine nach einem der vorhergehenden Ansprüche, **dadurch gekennzeichnet, dass** die Werkstückhalter (6,7) mit ihrer jeweils zugeordneten Stelleinheit (17,18) durch einen Schlittensteller (31,32) verbunden sind

10. Pressschweißmaschine nach einem der vorhergehenden Ansprüche, **dadurch gekennzeichnet, dass** die Schlittensteller (31,32) an der Verbindungsstelle zum Werkstückhalter (6,7) einen Mitnehmer (33) und eine Feder (34) für relative Ausweichbewegungen aufweisen.

11. Pressschweißmaschine nach einem der vorhergehenden Ansprüche, **dadurch gekennzeichnet, dass** die Pressschweißmaschine (1) eine Messeinrichtung (35) zum Messen der echten Vorschübe und der reinen Werkstückverkürzung ohne elastische Verformung aufweist.

12. Pressschweißmaschine nach einem der vorhergehenden Ansprüche, **dadurch gekennzeichnet, dass** die Messeinrichtung (35) mindestens eine zwischen einem Werkstückhalter (6,7) und dem zugeordneten Schweißkopf (13,14) angeordnete Messeinheit (36,37) aufweist.

13. Pressschweißmaschine nach einem der vorhergehenden Ansprüche, **dadurch gekennzeichnet, dass** die Messeinheit (36,37) einen Maßstab (38) und einen Messkopf (39) aufweist, die relativ zueinander beweglich am Werkstückhalter (6,7) und am zugeordneten Schweißkopf (13,14) angeordnet sind.

14. Pressschweißmaschine nach einem der vorhergehenden Ansprüche, **dadurch gekennzeichnet, dass** die Messeinrichtung (35) eine zentrale Messeinheit (40) zwischen den Werkstückhaltern (6,7) und/oder den Schweißköpfen (13,14)aufweist.

15. Pressschweißmaschine nach einem der vorhergehenden Ansprüche, **dadurch gekennzeichnet, dass** die Pressschweißmaschine (1) als Reibschweißmaschine oder als Maschine zum Schweißen mit bewegtem Lichtbogen ausgebildet ist.

16. Verfahren zum Pressschweißen von mehreren Werkstücken (2,3,4) entlang einer vorzugsweise gemeinsamen Vorschubachse (41) mittels einer Pressschweißmaschine (1) mit einem Gestell (10), zwei längs einer Vorschubachse (41) beweglichen Schweißköpfen (13,14) und zwei Stelleinheiten (17,18) mit daran angeordneten Vorschubantrieben (23) für die Beaufschlagung der Schweißköpfe (13,14), **dadurch gekennzeichnet, dass** die äußeren Werkstücke (3,4) von den beiden axial (41) beweglich am Gestell (10) gelagerten Stelleinheiten (17,18) relativ zueinander bewegt werden, wobei sich die Stelleinheiten (17,18) über ein gemeinsames Stellelement (26) gegenseitig unter Aufnahme der Pressschweißkräfte in einem geschlossenen Kräftesystem verstellbar abstützen.

17. Verfahren nach Anspruch 16, **dadurch gekennzeichnet, dass** die Stelleinheiten (17,18) und eine zentrale Spannvorrichtung (5) für ein zentrales Werkstück (2) gleichzeitig und synchron positioniert werden.

18. Verfahren nach Anspruch 16 oder 17, **dadurch gekennzeichnet, dass** beim Pressschweißen die echten vorschübe und die Werkstückverkürzungen ohne die beim Stauchen auftretenden elastischen Verformungen des zentralen Werkstücks (2) gemessen werden.

## Claims

1. Pressure welding machine comprising a frame (10), two welding heads (13, 14) which can be moved along a feed axis (41), and two adjusting units (17, 18) with feeding drives (23) for the welding heads (13, 14), **characterized in that** the two adjusting units (17, 18) are mounted on the frame (10) in an axially (41) movable manner and are connected to one another by means of a common adjusting element (26) with an adjusting drive (25) and supported.

2. Pressure welding machine according to Claim 1,
**characterized in that** the adjusting element (26) is formed as a continuous spindle (27) with two opposing threads (28, 29), which are connected to nuts (21, 22) on the adjusting units (17, 18).

3. Pressure welding machine according to Claim 1 or 2, **characterized in that** the threads (28, 29) are formed as motion-transmitting threads, in particular as spherical or trapezoidal threads.

4. Pressure welding machine according to Claim 1, 2 or 3, **characterized in that** the spindle (27) is arranged underneath the welding heads (13, 14) and adjusting units (17, 18) in the machine bed (11).

5. Pressure welding machine according to one of the preceding claims, **characterized in that** the adjusting drive (25) comprises a controllable motor (30), in particular an electric motor, for driving the spindle (27).

6. Pressure welding machine according to one of the preceding claims, **characterized in that** the frame (10) comprises a carriage guide (12) for the form-fitting mounting and guidance of travel carriages (14, 16, 19, 20) of the welding heads (13, 14) and adjusting units (17, 18).

7. Pressure welding machine according to one of the preceding claims, **characterized in that** the pressure welding machine (1) comprises a movable central clamping device (5) for a central workpiece (2), which is movably mounted and guided between the welding heads (13, 14) on the carriage guide (12).

8. Pressure welding machine according to one of the preceding claims, **characterized in that** the central clamping device (5) comprises two spaced-apart workpiece holders (6, 7), which comprise holder carriages (8, 9) movably mounted on the carriage guide (12).

9. Pressure welding machine according to one of the preceding claims, **characterized in that** the workpiece holders (6, 7) are connected to their respectively assigned adjusting unit (17, 18) by a carriage adjuster (31, 32).

10. Pressure welding machine according to one of the preceding claims, **characterized in that** the carriage adjusters (31, 32) comprise at the connecting point to the workpiece holder (6, 7) a driver (33) and a spring (34) for relative diverting movements.

11. Pressure welding machine according to one of the preceding claims, **characterized in that** the pressure welding machine (1) comprises a measuring device (35) for measuring the genuine feeds and the actual shortening of the workpiece without elastic deformation.

12. Pressure welding machine according to one of the preceding claims, **characterized in that** the measuring device (35) comprises at least one measuring unit (36, 37) arranged between the workpiece holder (6, 7) and the assigned welding head (13, 14).

13. Pressure welding machine according to one of the preceding claims, **characterized in that** the measuring unit (36, 37) comprises a scale (38) and a measuring head (39), which are arranged movably in relation to each other on the workpiece holder (6, 7) and on the assigned welding head (13, 14).

14. Pressure welding machine according to one of the preceding claims, **characterized in that** the measuring device (35) comprises a central measuring unit (40) between the workpiece holders (6, 7) and/or the welding heads (13, 14).

15. Pressure welding machine according to one of the preceding claims, **characterized in that** the pressure welding machine (1) is formed as a friction welding machine or as a machine for welding with a moving arc.

16. Method for the pressure welding of a number of workpieces (2, 3, 4) along a preferably common feed axis (41) by means of a pressure welding machine (1) comprising a frame (10), two welding heads (13, 14) which can be moved along a feed axis (41), and two adjusting units (17, 18) with feeding drives (23) arranged on them for acting on the welding heads (13, 14), **characterized in that** the outer workpieces (3, 4) are moved in relation to each other by the two adjusting units (17, 18) mounted in an axially (41) movable manner on the frame (10), the adjusting units (17, 18) being mutually supported in an adjustable manner by means of a common adjusting element (26) while taking up the pressure welding forces in a closed system of forces.

17. Method according to Claim 16, **characterized in that** the adjusting units (17, 18) and a central clamping device (5) for a central workpiece (2) are positioned simultaneously and synchronously.

18. Method according to Claim 16 or 17, **characterized in that**, during the pressure welding, the genuine feeds and the shortenings of the workpiece are measured without the elastic deformations of the central workpiece (2) that occur during the upsetting.

## Revendications

1. Machine de soudage par pression comprenant un bâti (10), deux têtes de soudage (13, 14) déplaçables le long d'un axe d'avance (41) et deux unités de commande (17, 18) avec des entraînements d'avance (23) pour les têtes de soudage (13, 14),
**caractérisée en ce que** les deux unités de commande (17, 18) sont montées de manière axialement déplaçable (41) sur le bâti (10) et sont connectées et supportées l'une à l'autre au moyen d'un élément de commande commun (26) avec un entraînement de commande (25).

2. Machine de soudage par pression selon la revendication 1, **caractérisée en ce que** l'élément de commande (26) est réalisé sous forme de broche continue (27) avec deux filetages opposés (28, 29), qui sont connectés par des écrous (21, 22) aux unités de commande (17, 18).

3. Machine de soudage par pression selon la revendication 1 ou 2, **caractérisée en ce que** les filetages (28, 29) sont réalisés sous forme de filetages de déplacement, en particulier sous forme de filetages sphériques ou trapézoïdaux.

4. Machine de soudage par pression selon la revendication 1, 2 ou 3, **caractérisée en ce que** la broche (27) est disposée sous les têtes de soudage (13, 14) et les unités de commande (17, 18) dans le banc de la machine (11).

5. Machine de soudage par pression selon l'une quelconque des revendications précédentes, **caractérisée en ce que** l'entraînement de commande (25) présente un moteur commandable (30), notamment un moteur électrique, pour l'entraînement de la broche (27).

6. Machine de soudage par pression selon l'une quelconque des revendications précédentes, **caractérisée en ce que** le bâti (10) présente un guidage de chariot (12) pour le support et le guidage par engagement positif de chariots de conduite (14, 16, 19, 20) des têtes de soudage (13, 14) et des unités de commande (17, 18).

7. Machine de soudage par pression selon l'une quelconque des revendications précédentes, **caractérisé en ce que** la machine de soudage par pression (1) présente un dispositif de serrage central mobile (5) pour une pièce centrale (2), qui est monté et guidé entre les têtes de soudage (13, 14) de manière mobile sur le guidage de chariot (12).

8. Machine de soudage par pression selon l'une quelconque des revendications précédentes, **caractérisée en ce que** le dispositif de serrage central (5) présente deux dispositifs de fixation de pièce espacés (6, 7), qui présentent des chariots de fixation (8, 9) montés mobiles sur le guidage de chariot (12).

9. Machine de soudage par pression selon l'une quelconque des revendications précédentes, **caractérisée en ce que** les dispositifs de fixation de pièce (6, 7) sont connectés par un dispositif de réglage de chariot (31, 32) à l'unité de commande (17, 18) respectivement associée.

10. Machine de soudage par pression selon l'une quelconque des revendications précédentes, **caractérisée en ce que** les dispositifs de réglage de chariot (31, 32) présentent, au point de connexion au dispositif de fixation de pièce (6, 7), un dispositif d'entraînement (33) et un ressort (34) pour des mouvements d'écartement relatifs.

11. Machine de soudage par pression selon l'une quelconque des revendications précédentes, **caractérisée en ce que** la machine de soudage par pression (1) présente un dispositif de mesure (35) pour mesurer les véritables avances et le simple raccourcissement de la pièce, sans déformation élastique.

12. Machine de soudage par pression selon l'une quelconque des revendications précédentes, **caractérisée en ce que** le dispositif de mesure (35) présente au moins une unité de mesure (36, 37) disposée entre un dispositif de fixation de pièce (6, 7) et la tête de soudage associée (13, 14).

13. Machine de soudage par pression selon l'une quelconque des revendications précédentes, **caractérisée en ce que** l'unité de mesure (36, 37) présente une échelle de mesure (38) et une tête de mesure (39), qui sont disposées de manière déplaçable l'une par rapport à l'autre sur le dispositif de fixation de pièce (6, 7) et sur la tête de soudage associée (13, 14).

14. Machine de soudage par pression selon l'une quelconque des revendications précédentes,
**caractérisée en ce que** le dispositif de mesure (35) présente une unité de mesure centrale (40) entre les dispositifs de fixation de pièce (6, 7) et/ou les têtes de soudage (13, 14).

15. Machine de soudage par pression selon l'une quelconque des revendications précédentes, **caractérisée en ce que** la machine de soudage par pression (1) est réalisée sous forme de machine de soudage par friction ou sous forme de machine pour le soudage à l'arc électrique mobile.

16. Procédé de soudage par pression de plusieurs pièces (2, 3, 4) le long d'un axe d'avance de préférence commun (41), au moyen d'une machine de soudage par pression (1), comprenant un bâti (10), deux têtes de soudage (13, 14) déplaçables le long d'un axe d'avance (41) et deux unités de commande (17, 18) avec des entraînements d'avance (23) disposés dessus pour solliciter les têtes de soudage (13, 14), **caractérisé en ce que** les pièces extérieures (3, 4) sont déplacées l'une par rapport à l'autre par les deux unités de commande (17, 18) montées de manière axialement (41) mobile sur le bâti (10), les unités de commande (17, 18) s'appuyant mutuellement, en recevant les forces de soudage par pression, par le biais d'un élément de commande commun (26) de manière déplaçable dans un système de forces fermé.

17. Procédé selon la revendication 16, **caractérisé en ce que** les unités de commande (17, 18) et un dispositif de serrage central (5) pour une pièce centrale (2) sont positionnés simultanément et de manière synchrone.

18. Procédé selon la revendication 16 ou 17,
**caractérisé en ce que** lors du soudage par pression, les véritables avances et les raccourcissements des pièces sont mesurés sans les déformations élastiques de la pièce centrale (2) qui se produisent lors de la compression.
